# EUROPEAN PATENT SPECIFICATION

(11) **EP 3 293 020 B1**
(45) Date of publication and mention of the grant of the patent: **01.05.2019**
(21) Application number: 17189779.6
(22) Date of filing: 07.09.2017
(51) Int. Cl.: B60C 25/05, B60C 25/138

(54) **TYRE CHANGING MACHINE**
REIFENWECHSELMASCHINE
MACHINE DE CHANGEMENT DE PNEU

(30) Priority: 09.09.2016 IT 201600091443
(43) Date of publication of application: 14.03.2018
(73) Proprietor: Devel S.r.l., 41042 Fiorano Modenese (MO) (IT)
(72) Inventor: BONETTI, Valentino, 41042 Fiorano Modenese (MO) (IT)
(74) Representative: Brunacci, Marco

(56) References cited:
- EP-A1- 0 624 486
- EP-A1- 2 361 791
- EP-A1- 2 514 612
- EP-A1- 2 965 927
- US-A1- 2014 283 590

## Description

The present invention relates to a machine for fitting and removing the wheel tyres of vehicles.

As is known, to remove the tyre of a vehicle wheel from the relevant rim, the upper bead (also called "first bead") of the tyre must first of all be detached from the rim edge on which it is fitted (operation also called "bead breaking"). Subsequently, the first bead is secured and taken off the rim edge (bead engagement). Finally, the tyre is removed from the rim and pushed to the opposite side of the first removed bead.

To be able to entirely remove the tyre from the wheel rim, the bead breaking of the lower bead (also called "second bead") of the tyre is also required.

To make these operations easier, the use of various types of machines is known, so-called "tyre changers", adapted to both allow removing the tyre from the rim and permit the subsequent phase of fitting the tyre on the rim.

A particular type of tyre changing machine is shown in patent document WO 2014/174331 A1 and comprises a base frame, which sustains a rotating gripping unit of the rim, which permits setting the wheel in rotation around a work axis.

The rotating gripping unit slides on the base frame along a horizontal sliding direction and is fitted in a swinging way around a swinging axis parallel to the sliding direction; this way the work axis, initially vertical, can be inclined (preferably by an angle of between 10° and 20°) to make the tyre removal/fitting operations easier.

Also mounted on the base frame is a tool-holder turret having a plurality of work tools mobile in a vertical direction.

To remove the tyre from the rim, tyre bead breaking is initially done using a special work tool (so-called "bead breaking tool"), which is forcefully inserted between the tyre and the rim.

Afterwards, another work tool, shaped like a hook, is inserted between the bead and the edge of the rim to engage the edge of the bead and keep it away from the rim, so as to take off the bead.

This type of bead breaking machine is susceptible to further upgrading.

In this respect, the fact is underlined that the bead breaking operation is often critical and must be performed by the operator with care because the approach movement of the rotating gripping unit towards the tool-holder turret can cause the rim to strike against the tool.

When the bead breaking tool is inserted between the bead and the rim, in fact, part of the tool disappears from the operator's sight and risks coming into contact with the internal surface of the rim, which is not visible from the outside inasmuch as still covered by the tyre.

The same problem also occurs during the use of the hook-shaped tool, which must be inserted between the tyre and the rim with the risk of knocking the internal part of the rim and compromising the integrity of the tool and/or of the rim itself.

In this regard, the fact is underlined that the conformation of the internal surface of the rim, i.e., of that part of the rim which is not visible from the outside inasmuch as covered by the tyre, is not known to the operator beforehand inasmuch as it varies according to the wheel model.

Especially when used by unskilled personnel, therefore, these tyre changing machines of known type are not always practical and easy to use.

Special types of tyre changing machines are disclosed in the patent documents EP0624486A1 showing the features of the preamble of claim 1, EP2965927A1, EP2361791A1 and US2014/283590A1.

The main aim of the present invention is to provide a machine for fitting and removing the wheel tyres of vehicles which is safer to use, in particular from the point of view of the reduction of the risk of the various moving parts of the machine and of the wheel striking against one another and breaking the work tools and the rim.

A further object of the present invention is to provide a machine for fitting and removing the wheel tyre of vehicles which can be used in a practical, easy and functional way, and which can reduce the margins of error on the part of the operator during the tyre removal/fitting phases.

Another object of the present invention is to provide a machine for fitting and removing the wheel tyre of vehicles which allows obtaining the aforementioned upgrading within the scope of a simple, rational, easy, effective to use and affordable solution.

The aforementioned objects are achieved by the present machine for fitting and removing the wheel tyre of vehicles having the characteristics of claim 1.

Other characteristics and advantages of the present invention will become more evident from the description of a preferred, but not exclusive, embodiment of a machine for fitting and removing the wheel tyre of vehicles, illustrated by way of an indicative, but non-limiting example, in the attached drawings in which:
Figure 1 is an axonometric view of a first embodiment of the machine according to the invention;
Figure 2 is an axonometric view, from another angle, of the machine of Figure 1;
Figures 3 and 4 are sectional views of the machine of Figure 1 in two different positions;
Figure 5 is an axonometric view of a second embodiment of the machine according to the invention;
Figure 6 is an axonometric view, from another angle, of the machine of Figure 5.

With particular reference to these illustrations, reference numeral 1 globally indicates a machine for fitting and removing the wheel tyre of vehicles.

The machine 1 is usable, in particular, for removing the tyre P from the rim H of a wheel R of vehicles and for its refitting (or for fitting a substitutive tyre).

The tyre P has two opposite beads T designed to come into contact with two flanges F of the rim H.

Between the flanges F of the rim H is defined the internal surface of the rim H (so-called channel E) which remains hidden and which is not visible from the outside when the tyre P is fitted on the rim H.

The machine 1 comprises at least one base frame 2 for resting on the ground. On the base frame 2 is mounted at least one tool-holder turret 3 which has at least one work tool 4a, 4b, 4c, 4d for fitting and/or removing the tyre P onto and/or from the rim H.

Advantageously, the machine 1 comprises a plurality of work tools 4a, 4b, 4c, 4d which, in particular, are split into:
- a first bead breaking tool 4a and a second bead breaking tool 4b, the purpose of which is to de-bead the tyre P;
- a hook-shaped tool 4c, the purpose of which is to extract from the channel E one of the beads T of the already de-beaded tyre P;
- a fitting tool 4d, the purpose of which is to fit the tyre P on the rim H. More in detail, the tool-holder turret 3 comprises at least an arm 5, 6 which bears the work tools 4a, 4b, 4c, 4d and which is movable along a substantially vertical lifting/lowering direction A.

In the embodiment shown in the illustrations, there are two arms 5, 6, a first arm 5, which bears the first bead breaking tool 4a, the hook-shaped tool 4c and the fitting tool 4d, and a second arm 6, which bears the second bead breaking tool 4b.

The first bead breaking tool 4a, the hook-shaped tool 4c and the fitting tool 4d are fitted on the first arm 5 in a reciprocally rotatable way so they can be used alternately on the wheel R.

The first arm 5 is associated with a first hydraulic jack 27 which causes it to slide along the lifting/lowering direction A.

Similarly, the second arm 6 is associated with a second hydraulic jack 28 which causes it to slide along the lifting/lowering direction A.

The machine 1 also comprises at least one rotating gripping unit 30 adapted to support the wheel R and to set it in rotation around a work axis B, the rotating gripping unit 30 being mounted on the base frame 2 in a sliding manner along a horizontal sliding direction C close to and away from the tool-holder turret 3.

In particular, the base frame 2 comprises two or more guide members 7, 8 (in particular a first guide member 7 and a second guide member 8) which extend along the sliding direction C and the rotating gripping unit 30 comprises an equal number of sliding couplings 9 which are fitted sliding around the guide members 7, 8.

The rotating gripping unit 30, furthermore, comprises a motor-driven spindle 10 for setting the wheel R in rotation around the work axis B and a swinging assembly 11 for swinging the motor-driven spindle 10 around a swinging axis D parallel to the sliding direction C.

This way, the work axis B, normally arranged vertically, can be inclined (preferably by an angle between 10° and 20°) to make the removal phases of the tyre P easier.

The swinging assembly 11 is associated with the sliding couplings 9 and the motor-driven spindle 10 is associated with the swinging assembly 11.

To approach the rotating gripping unit 30 and move it away from the tool-holder turret 3, the machine 1 comprises at least one actuator assembly 12, 13 which actuates the sliding of the rotating gripping unit 30 along the sliding direction C. The actuator assembly 12, 13 e.g. comprises at least one hydraulic cylinder having a sleeve 14 and a stem 15 removable from the sleeve 14.

Preferably, there are two hydraulic cylinders 12, 13, a first hydraulic cylinder 12, arranged in the proximity of and parallel to the first guide member 7, and a second hydraulic cylinder 13, arranged in the proximity of and parallel to the second guide member 8.

The hydraulic cylinders 12, 13 are supplied with an operator fluid (usually oil under pressure) by means of a feeding system 31, 32 comprising a pumping assembly 31 and a hydraulic distribution circuit 32.

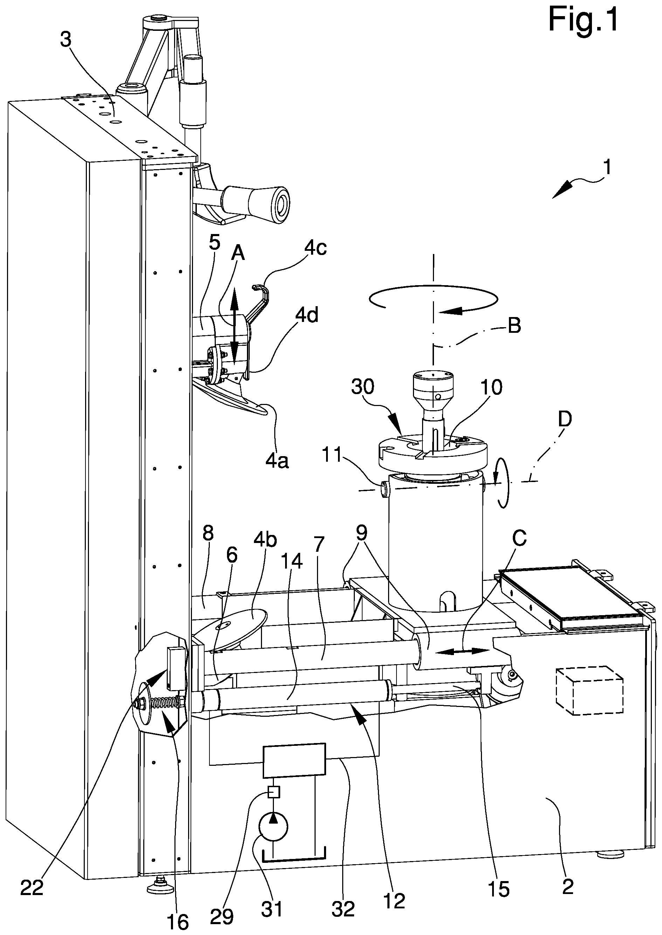

The feeding system 31, 32 is shown in a schematic and simplified manner in Figure 1; for the person expert in the field it is easy to appreciate that the feeding system 31, 32 really mounted on the machine 1 is more articulated and complex than that shown and that, advantageously, it can be used to also feed the hydraulic jacks 27, 28 and any other hydraulic device mounted on board the machine 1.

The machine 1 also comprises elastic safety means 16 interposed between the actuator assembly 12, 13 and at least one of the base frame 2 and the rotating gripping unit 30, the elastic safety means 16 being compressible by the actuator assembly 12, 13 in the event of a contact between the rim H and one of the work tools 4a, 4b, 4c, 4d.

The elastic safety means 16 comprise:
- at least one guide pin 17 associated with the actuator assembly 12, 13; and
- at least one helical spring 18 arranged around the guide pin 17 and having a first ending part 18a arranged stopped up on a first abutment surface 19 locked together with the guide pin 17 and a second ending part 18b arranged stopped up on a second abutment surface 20 locked together with at least one of the base frame 2 and the rotating gripping unit 30.

The second abutment surface 20 comprises at least one through hole 21 crossed from side to side by the guide pin 17.

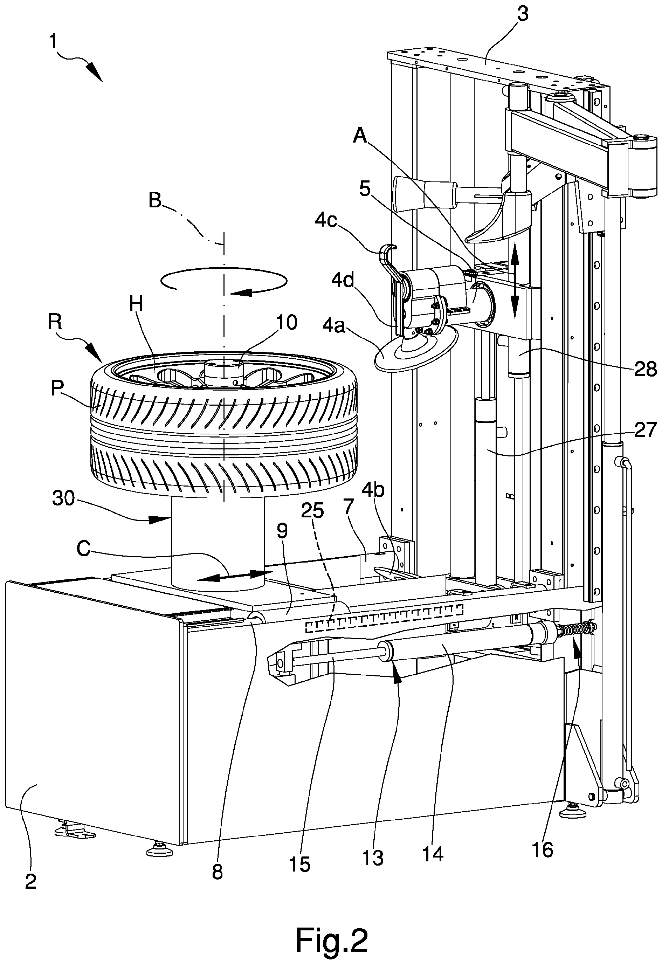

In the embodiment shown in the Figures 1 to 4, the elastic safety means 16 are interposed between the sleeve 14 and the base frame 2.

In particular, in this embodiment, the elastic safety means 16 comprise two guide pins 17, which are associated with the sleeve 14 of the two hydraulic cylinders 12, 13, and two helical springs 18 which are positioned around the two guide pins 17.

The first abutment surfaces 19 are defined at the free ending parts of the two guide pins 17, while the second abutment surfaces 20 are defined by two corresponding portions of the base frame 2, on which are obtained two through holes 21 crossed from side to side by the two guide pins 17.

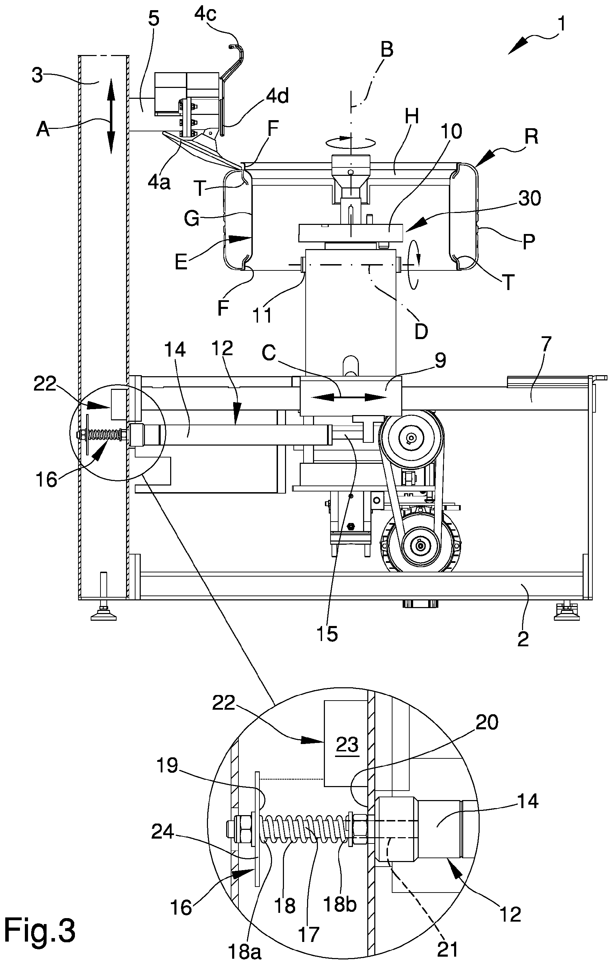

In practice, on one side of the portions of the base frame 2 (at which the through holes 21 are obtained) the sleeves 14 of the hydraulic cylinders 12, 13 are normally resting, while on the opposite side the second ending parts 18b of the helical springs 18 come to a stop (Figure 3).

When the rotating gripping unit 30 is at a distance from the tool-holder turret 3, the actuator assembly 12, 13 can be operated to determine the re-entry of the stems 15 inside the sleeves 14 and thus bring the rotating gripping unit 30 nearer to the tool-holder turret 3 and to the work tools 4a, 4b, 4c, 4d.

In the event of the work tools 4a, 4b, 4c, 4d coming into contact with the wheel R in an undesired manner, such as the case, e.g., of the first bead breaking tool 4a ending up against the bottom of the channel E during the bead breaking phase, any knock will not cause any damage to the work tools 4a, 4b, 4c, 4d or to the rim H because, thanks to the elastic safety means 16, the hydraulic cylinders 12, 13 enjoy an extra shortening stroke and the additional force produced by the actuator assembly 12, 13 is discharged onto the helical springs 18.

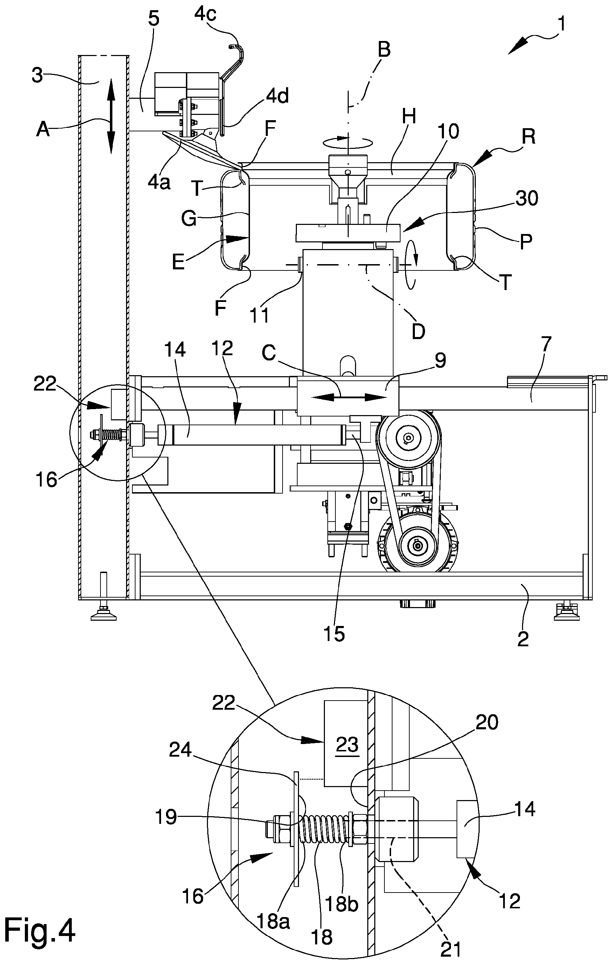

As soon as one of the work tools 4a, 4b, 4c, 4d comes into contact with the rim H, in fact, the following occurs:
- the rotating gripping unit 30, on seeing any further approach towards the tool-holder turret 3 prevented by the presence of the work tool 4a, 4b, 4c, 4d, stops its forward movement along the sliding direction C;
- the hydraulic cylinders 12, 13 continue to shorten but, because the stems 15 cannot displace which, like the rotating gripping unit 30, are blocked by the contact with the work tool 4a, 4b, 4c, 4d, they do so by moving the sleeves 14 away from the base frame 2 and loading the helical springs 18 (Figure 4).

It is therefore easy to appreciate that the operator can control the operation of the actuator assembly 12, 13 in a simpler and more tranquil way considering that, even in the case of contact between the rim H and the work tools 4a, 4b, 4c, 4d, the additional force produced by the actuator assembly 12, 13 discharges onto the helical springs 18 and does not cause any damage to the wheel R or to the machine 1.

To facilitate the operation of the machine 1, sensor means 22 are usefully provided adapted to detect the degree of compression of the elastic safety means 16 by the actuator assembly 12, 13.

The sensor means 22 comprise at least one device chosen from the list comprising: LED matrix sensors, laser sensors, force sensors.

In the particular embodiment shown in the figures 1 to 4, for example, the sensor means 22 comprise at least one detection sensor 23 for detecting the distance between the first abutment surface 19 and the second abutment surface 20; the lesser the distance between the surfaces 19, 20, the greater the degree of compression of the elastic safety means 16.

The detection sensor 23 is an optical sensor mounted on the second abutment surface 20 which detects the distance of a plate 24 mounted on the first abutment surface 19.

Usefully, the detection sensor 23 is only mounted at the first hydraulic cylinder 12, while the second hydraulic cylinder 13 is without one.

Alternative embodiments cannot however be ruled out wherein the sensor means 22 comprise a device of a different type to that described and shown in the illustrations, such as, e.g., a force sensor / load cell.

In fact, considering that the degree of the compression of the helical springs 18 is proportionate to the force applied on them, it follows that by means of a force sensor, e.g., placed between the first ending part 18a and the guide pin 17, or between the second ending part 18b and the base frame 2, or in another suitable point, it is easily possible to trace the degree of the compression.

According to the invention, the machine 1 comprises at least one processing and control unit electronically associated with the actuator assembly 12, 13 and with the sensor means 22 and adapted to inhibit the commands of the actuator assembly 12, 13 that determine the compression of the elastic safety means 16 beyond a threshold value.

This way, the operator can command the machine 1 in an even safer way because once the threshold value is reached, the actuator assembly 12, 13 deactivates automatically, preventing for example the helical springs from packing together.

Alternatively or in conjunction with what has been mentioned above, the machine 1 can comprise:
- at least one detection assembly 25, e.g. of the type of an encoder or the like, which detects the position of the rotating gripping unit 30 along the sliding direction C; and
- at least one processing and control unit electronically associated with the actuator assembly 12, 13, with the detection assembly 25 and with the sensor means 22, wherein the processing and control unit is adapted for the acquisition of the internal profile G of the rim H by means of the contact of one of the work tools 4a, 4b, 4c, 4d with a plurality of points of the internal profile G arranged at different levels, for each of these points the detection of the position of the rotating gripping unit 30 occurring along the sliding direction C when the compression of the elastic safety means 16 reaches a predetermined value.

In this respect, it is underlined that, within the scope of the present treatise, by "internal profile" G is meant the conformation of the channel E which has been obtained by sectioning the rim H with a median section plane lying on the axis of the wheel R.

In other words, the machine 1 equipped with a processing and control unit, with a detection assembly 25 and with sensor means 22 like those just described is able to move the work tools 4a, 4b, 4c, 4d (e.g., by means of step by step forward movements) in an independent way along the lifting/lowering direction A and the rotating gripping unit 30 along the sliding direction C, so as to make one of the work tools 4a, 4b, 4c, 4d (which acts as feeler device) transit along the internal profile G, and from time to time acquire the position of the rotating gripping unit 30 at different levels (i.e., at different heights off the ground).

The detection of the position of the rotating gripping unit 30 occurs the instant the elastic safety means 16 reach a degree of compression equal to the pre-set value, so as to make sure the measurement is always taken with the work tool 4a, 4b, 4c, 4d in contact with the rim H.

From the measurements taken, the machine 1 is able to self-learn information such as the nominal diameter of the rim H and the conformation of the channel E, and then exploit such information in the subsequent tyre fitting and removal operations onto and from the rim H.

Advantageously, this self-learning procedure is performed using the first bead breaking tool 4a as feeler device, so as to perform it at the same time as the initial bead breaking operation.

Alternatively or in conjunction with the sensor means 22, the machine 1 can comprise at least one pressure detector device 29 associated with at least one of:
- hydraulic cylinders 12, 13;
- hydraulic jacks 27, 28;
- the feeding system 31, 32.

The pressure detector device 29 basically detects whether the pressure of the operating fluid fed by the feeding system 31, 32 exceeds a certain limit value and allows the machine 1 to automatically understand whether:
- during the activation of the hydraulic cylinders 12, 13 and the approach of the wheel R to the tool-holder turret 3, the rim H enters into contact with the work tools 4a, 4b, 4c, 4d;
- during the activation of the hydraulic jacks 27, 28 and the movement of the arms 5, 6 along the lifting/lowering direction A, the work tools 4a, 4b, 4c, 4d come into contact with the rim H and/or with the tyre P.

In fact, when the work tools 4a, 4b, 4c, 4d and wheel R come into contact, the operating fluid pressure naturally tends to increase.

As mentioned above, in the embodiment shown in Figures 1 to 4, the elastic safety means 16 are interposed between the sleeve 14 of the hydraulic cylinders 12, 13 and the base frame 2.

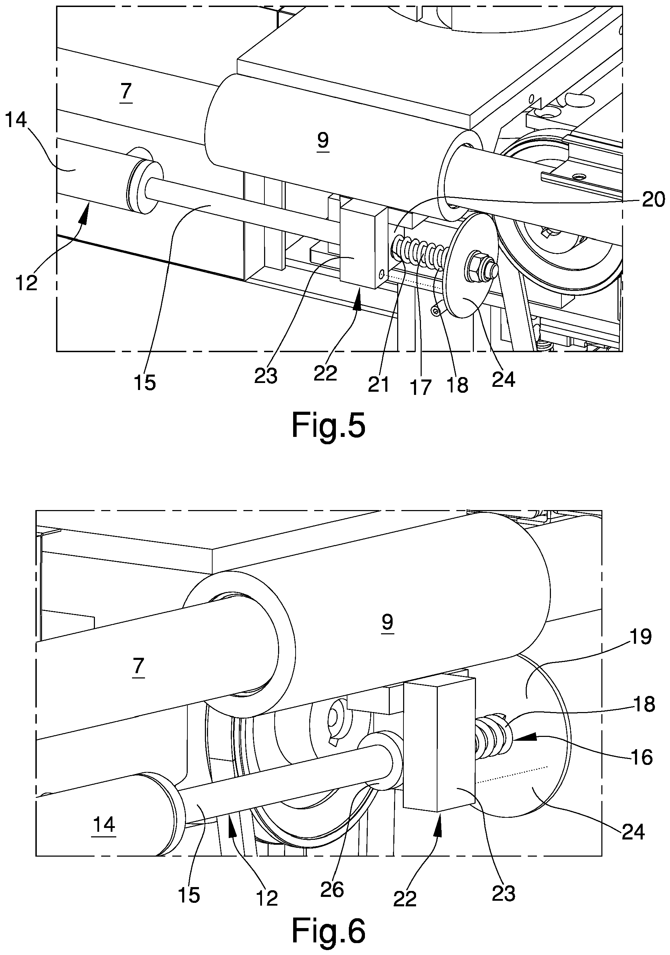

Alternative embodiments cannot however be ruled out as the one shown in Figures 5 and 6 wherein, on the contrary, the elastic safety means 16 are interposed between the stem 15 of the hydraulic cylinders 12, 13 and the rotating gripping unit 30.

In this embodiment as well, the elastic safety means 16 comprise two guide pins 17 and two helical springs 18 (equally distributed on the two hydraulic cylinders 12, 13), but with the difference that the guide pins 17 are associated with the two stems 15 of the hydraulic cylinders 12, 13 and not with the sleeves 14.

The first abutment surfaces 19 are defined at the free ending parts of the two guide pins 17 while the second abutment surfaces 20 are defined by two corresponding portions of the rotating gripping unit 30 (one for each hydraulic cylinder 12, 13), on which are obtained the two through holes 21 crossed from side to side by the two guide pins 17.

In practice, on one side of the portions of the rotating gripping unit 30 (at which are obtained the through holes 21) a shoulder 26 normally rests, obtained on each stem 15, while on the opposite side the second ending parts 18b of the helical springs 18 come to a stop.

It is easy to appreciate how the operation of the embodiment shown in the

Figures 5 and 6 is identical to that of the embodiment shown in the figures from 1 to 4 considering that, in this case too, part of the force produced by the hydraulic cylinders 12, 13 ends up being discharged onto the helical springs 18 the instant the work tools 4a, 4b, 4c, 4d come into contact with the wheel R.

It is also pointed out that, as in the Figures from 1 to 4, the embodiment of the

Figures 5 and 6 also envisages the presence of sensor means 22 adapted to detect the compression of the elastic safety means 16 by the actuator assembly 12, 13.

In this case as well, the detection sensor 23 is an optical sensor which is mounted on the second abutment surface 20 and which detects the distance of a plate 24 mounted on the first abutment surface 19, operating in exactly the same way as the sensor means 22 previously described with reference to the embodiment of the Figures from 1 to 4.

## Claims

1. A machine (1) for fitting and removing the wheel tyres of vehicles, comprising:
- at least one base frame (2);
- at least one tool-holder turret (3), mounted on said base frame (2) and having at least one work tool (4a, 4b, 4c, 4d) for fitting and/or removing a tyre (P) onto and/or from a rim (H) of a vehicle wheel (R);
- at least one rotating gripping unit (30) adapted to support said wheel (R) and to set it in rotation around a work axis (B), said rotating gripping unit (30) being mounted on said base frame (2) in a sliding manner along a horizontal sliding direction (C) close to and away from said tool-holder turret (3); and
- at least one actuator assembly (12, 13) for actuating the sliding of said rotating gripping unit (30) along said sliding direction (C);
**characterized by** the fact that it comprises:
- elastic safety means (16) interposed between said actuator assembly (12, 13) and at least one of said base frame (2) and said rotating gripping unit (30), said elastic safety means (16) being compressible by said actuator assembly (12, 13) in the event of a contact between said rim (H) and said work tool (4a, 4b, 4c, 4d);
- sensor means (22) adapted to detect the degree of compression of said elastic safety means (16) by said actuator assembly (12, 13); and
- at least one processing and control unit electronically associated with said actuator assembly (12, 13) and with said sensor means (22) and adapted to inhibit the commands of said actuator assembly (12, 13) that determine the compression of said elastic safety means (16) beyond a threshold value.

2. The machine (1) according to claim 1, **characterized by** the fact that said elastic safety means (16) comprise:
- at least one guide pin (17) associated with said actuator assembly (12, 13); and
- at least one helical spring (18) arranged around said guide pin (17) and having a first ending part (18a) arranged stopped up on a first abutment surface (19) locked together with said guide pin (17) and a second ending part (18b) arranged stopped up on a second abutment surface (20) locked together with at least one of said base frame (2) and said rotating gripping unit (30).

3. The machine (1) according to claim 2, **characterized by** the fact that said second abutment surface (20) comprises at least one through hole (21) crossed from side to side by said guide pin (17).

4. The machine (1) according to claim 2 or 3, **characterized by** the fact that said sensor means (22) comprise at least one detection sensor (23) for detecting the distance between said first abutment surface (19) and said second abutment surface (20).

5. The machine (1) according to one or more of the preceding claims, **characterized by** the fact that said sensor means (22) comprise at least one device chosen from the list comprising: LED matrix sensors, laser sensors, force sensors.

6. The machine (1) according to one or more of the preceding claims, **characterized by** the fact that it comprises:
- at least one detection assembly (25) for detecting the position of said rotating gripping unit (30) along said sliding direction (C); and
- at least one processing and control unit electronically associated with said actuator assembly (12, 13), with said detection assembly (25) and with said sensor means (22), said processing and control unit being adapted for the acquisition of the internal profile (G) of said rim (H) by means of the contact of said work tool (4a, 4b, 4c, 4d) with a plurality of points of said internal profile (G) arranged at different levels, for each of said points the detection of the position of said rotating gripping unit (30) occurring along said sliding direction (C) when the compression of said elastic safety means (16) reaches a predetermined value.

7. The machine (1) according to one or more of the preceding claims, **characterized by** the fact that said actuator assembly (12, 13) comprises at least one hydraulic cylinder having a sleeve (14) and a stem (15) removable from said sleeve (14), said elastic safety means (16) being interposed between said sleeve (14) and said base frame (2).

8. The machine (1) according to one or more of the preceding claims, **characterized by** the fact that said actuator assembly (12, 13) comprises at least one hydraulic cylinder having a sleeve (14) and a stem (15) removable from said sleeve (14), said elastic safety means (16) being interposed between said stem (15) and said rotating gripping unit (30).

9. The machine (1) according to one or more of the preceding claims, **characterized by** the fact that it comprises:
- at least one feeding system (31, 32) that feeds said hydraulic cylinder (12, 13) with a working fluid; and
- at least one pressure detector device (29) associated with at least one of said hydraulic cylinders (12, 13) and said feeding system (31, 32) and adapted to detect whether the pressure of said working fluid fed by said feeding system (31, 32) exceeds a limit value.

## Patentansprüche

1. Maschine (1) zum Aufziehen und Abziehen der Radreifen von Fahrzeugen, umfassend:
- mindestens einen Grundrahmen (2);
- mindestens einen Werkzeughalterturm (3), der an dem Grundrahmen (2) befestigt ist und mindestens ein Arbeitswerkzeug (4a, 4b, 4c, 4d) zum Aufziehen und/oder Abziehen eines Reifens (P) auf und/oder von einer Felge (H) eines Fahrzeugrades (R) aufweist;
- mindestens eine Drehgreifeinheit (30), die angepasst ist, um das Rad (R) zu stützen und es um eine Arbeitsachse (B) in Drehung zu versetzen, wobei die Drehgreifeinheit (30) am Grundrahmen (2) in einer verschiebbaren Weise entlang einer horizontalen Gleitrichtung (C) nahe zu und weg von dem Werkzeughalterturm (3) befestigt ist; und
- mindestens eine Aktuatoranordnung (12, 13) zum Bewirken des Verschiebens der Drehgreifeinheit (30) entlang der Verschieberichtung (C);
**dadurch gekennzeichnet, dass** sie umfasst:
- elastische Sicherheitsmittel (16), die zwischen der Aktuatoranordnung (12, 13) und mindestens einem des Grundrahmens (2) und der Drehgreifeinheit (30) angeordnet sind, wobei die elastischen Sicherheitsmittel (16) im Fall eines Kontaktes zwischen der Felge (H) und dem Arbeitswerkzeug (4a, 4b, 4c, 4d) von der Aktuatoranordnung (12, 13) komprimierbar sind;
- Sensormittel (22), die angepasst sind, um den Grad der Komprimierung des elastischen Sicherheitsmittels (16) durch die Aktuatoranordnung (12, 13) zu ermitteln; und
- mindestens eine Verarbeitungs- und Steuereinheit, die mit der Aktuatoranordnung (12, 13) und mit den Sensormitteln (22) elektronisch verbunden und eingerichtet ist, um die Befehle der Aktuatoranordnung (12, 13) zu sperren, die die Komprimierung der elastischen Sicherheitsmittel (16) über einen Schwellwert hinaus bestimmen.

2. Maschine (1) nach Anspruch 1, **dadurch gekennzeichnet, dass** die elastischen Sicherheitsmittel (16) umfassen:
- mindestens einen Führungsbolzen (17), der mit der Aktuatoranordnung (12, 13) verbunden ist; und
- mindestens eine Schraubenfeder (18), die um den Führungsbolzen (17) angeordnet ist und ein erstes Endteil (18a), das auf einer ersten Anlagefläche (19), die mit dem Führungsbolzen (17) verriegelt ist, arretiert angeordnet ist, und ein zweites Endteil (18b), das auf einer zweiten Anlagefläche (20), die mit mindestens einem des Grundrahmens (2) und der Drehgreifeinheit (30) verriegelt ist, arretiert angeordnet ist, aufweist.

3. Maschine (1) nach Anspruch 2, **dadurch gekennzeichnet, dass** die zweite Anlagefläche (20) mindestens ein Durchgangsloch (21) umfasst, das vom Führungsbolzen (17) seitlich durchquert wird.

4. Maschine (1) nach Anspruch 2 oder 3, **dadurch gekennzeichnet, dass** die Sensormittel (22) mindestens einen Detektionssensor (23) zum Ermitteln des Abstands zwischen der ersten Anlagefläche (19) und der zweiten Anlagefläche (20) umfassen.

5. Maschine (1) nach einem oder mehreren der vorhergehenden Ansprüche, **dadurch gekennzeichnet, dass** die Sensormittel (22) mindestens eine Vorrichtung umfassen, die ausgewählt ist aus der Liste, umfassend: LED-Matrixsensoren, Lasersensoren, Kraftsensoren.

6. Maschine (1) nach einem oder mehreren der vorhergehenden Ansprüche, **dadurch gekennzeichnet, dass** sie umfasst:
- mindestens eine Detektionsanordnung (25) zum Ermitteln der Position der Drehgreifeinheit (30) entlang der Verschieberichtung (C) und
- mindestens eine Verarbeitungs- und Steuereinheit, die mit der Aktuatoranordnung (12, 13), mit der Detektionsanordnung (25) und mit den Sensormitteln (22) elektronisch verbunden ist, wobei die Verarbeitungs- und Steuereinheit eingerichtet ist für die Erfassung des Innenprofils (G) der Felge (H) mittels des Kontaktes des Arbeitswerkzeugs (4a, 4b, 4c, 4d) mit einer Vielzahl von Punkten des Innenprofils (G), die auf verschiedenen Ebenen angeordnet sind, wobei für jeden der Punkte die Ermittlung der Position der Drehgreifeinheit (30) entlang der Verschieberichtung (C) erfolgt, wenn die Komprimierung der elastischen Sicherheitsmittel (16) einen vordefinierten Wert erreicht.

7. Maschine (1) nach einem oder mehreren der vorhergehenden Ansprüche, **dadurch gekennzeichnet, dass** die Aktuatoranordnung (12, 13) mindestens einen Hydraulikzylinder mit einer Hülse (14) und einem Schaft (15), der aus der Hülse (14) entfernbar ist, umfasst, wobei die elastischen Sicherheitsmittel (16) zwischen der Hülse (14) und dem Grundrahmen (2) angeordnet sind.

8. Maschine (1) nach einem oder mehreren der vorhergehenden Ansprüche, **dadurch gekennzeichnet, dass** die Aktuatoranordnung (12, 13) mindestens einen Hydraulikzylinder mit einer Hülse (14) und einem Schaft (15), der aus der Hülse (14) entfernbar ist, umfasst, wobei die elastischen Sicherheitsmittel (16) zwischen dem Schaft (15) und der Drehgreifeinheit (30) angeordnet sind.

9. Maschine (1) nach einem oder mehreren der vorhergehenden Ansprüche, **dadurch gekennzeichnet, dass** sie umfasst:
- mindestens ein Zufuhrsystem (31, 32), das dem Hydraulikzylinder (12, 13) ein Arbeitsfluid zuführt; und
- mindestens eine Druckdetektorvorrichtung (29), die mit mindestens einem der Hydraulikzylinder (12, 13) und dem Zufuhrsystem (31, 32) verbunden und so eingerichtet ist, um zu ermitteln, ob der Druck des Arbeitsfluids, das vom Zufuhrsystem (31, 32) zugeführt wird, einen Grenzwert überschreitet.

## Revendications

1. Machine (1) pour installer et enlever les pneus de roues de véhicules, comprenant :
- au moins un châssis de base (2) ;
- au moins une tourelle porte-outil (3), montée sur ledit châssis de base (2) et ayant au moins un outil de travail (4a, 4b, 4c, 4d) pour installer et/ou enlever un pneu (P) sur et/ou depuis une jante (H) d'une roue de véhicule (R) ;
- au moins une unité de préhension rotative (30) adaptée pour supporter ladite roue (R) et pour la mettre en rotation autour d'un axe de travail (B), ladite unité de préhension rotative (30) étant montée sur ledit châssis de base (2) de manière coulissante suivant une direction de coulissement horizontale (C) près et à l'opposé de ladite tourelle porte-outil (3) ; et
- au moins un ensemble actionneur (12, 13) pour actionner le coulissement de ladite unité de préhension rotative (30) suivant ladite direction de coulissement (C) ; **caractérisée en ce qu'**elle comprend :
- des moyens de sécurité élastiques (16) interposés entre ledit ensemble actionneur (12, 13) et au moins l'un dudit châssis de base (2) et ladite unité de préhension rotative (30), lesdits moyens de sécurité élastiques (16) étant compressibles par ledit ensemble actionneur (12, 13) dans le cas d'un contact entre ladite jante (H) et ledit outil de travail (4a, 4b, 4c, 4d) ;
- des moyens de capteur (22) adaptés pour détecter le degré de compression desdits moyens de sécurité élastiques (16) par ledit ensemble actionneur (12, 13) ; et
- au moins une unité de traitement et de commande associée électroniquement audit ensemble actionneur (12, 13) et auxdits moyens de capteur (22) et adaptée pour inhiber les commandes dudit ensemble actionneur (12, 13) qui déterminent la compression desdits moyens de sécurité élastiques (16) au-delà d'une valeur seuil.

2. Machine (1) selon la revendication 1, **caractérisée en ce que** lesdits moyens de sécurité élastiques (16) comprennent :
- au moins une broche de guidage (17) associée audit ensemble actionneur (12, 13) ; et
- au moins un ressort hélicoïdal (18) agencé autour de ladite broche de guidage (17) et ayant une première partie de fin (18a) agencée arrêtée sur une première surface de butée (19) verrouillée avec ladite broche de guidage (17) et une seconde partie de fin (18b) agencée arrêtée sur une seconde surface de butée (20) verrouillée avec au moins l'un dudit châssis de base (2) et de ladite unité de préhension rotative (30).

3. Machine (1) selon la revendication 2, **caractérisée en ce que** ladite seconde surface de butée (20) comprend au moins un trou traversant (21) traversé d'un côté à l'autre par ladite broche de guidage (17).

4. Machine (1) selon la revendication 2 ou 3, **caractérisée en ce que** lesdits moyens de capteur (22) comprennent au moins un moyen de détection (23) pour détecter la distance entre ladite première surface de butée (19) et ladite seconde surface de butée (20).

5. Machine (1) selon une ou plusieurs des revendications précédentes, **caractérisée en ce que** lesdits moyens de capteur (22) comprennent au moins un dispositif choisi dans la liste comprenant : des capteurs matriciels à DEL, des capteurs laser, des capteurs de force.

6. Machine (1) selon une ou plusieurs des revendications précédentes, **caractérisée en ce qu'**elle comprend :
- au moins un ensemble de détection (25) pour détecter la position de ladite unité de préhension rotative (30) suivant ladite direction de coulissement (C) ; et
- au moins une unité de traitement et de commande associée électroniquement audit ensemble actionneur (12, 13), audit ensemble de détection (25) et auxdits moyens de capteur (22), ladite unité de traitement et de commande étant adaptée pour l'acquisition du profil interne (G) de ladite jante (H) au moyen du contact dudit outil de travail (4a, 4b, 4c, 4d) avec une pluralité de points dudit profil interne (G) agencés à des niveaux différents, pour chacun desdits points la détection de la position de ladite unité de préhension rotative (30) se produisant suivant ladite direction de coulissement (C) lorsque la compression desdits moyens de sécurité élastiques (16) atteint une valeur prédéterminée.

7. Machine (1) selon une ou plusieurs des revendications précédentes, **caractérisée en ce que** ledit ensemble actionneur (12, 13) comprend au moins un vérin hydraulique ayant un manchon (14) et une tige (15) amovible dudit manchon (14), lesdits moyens de sécurité élastiques (16) étant interposés entre ledit manchon (14) et ledit châssis de base (2).

8. Machine (1) selon une ou plusieurs des revendications précédentes, **caractérisée en ce que** ledit ensemble actionneur (12, 13) comprend au moins un vérin hydraulique ayant un manchon (14) et une tige (15) amovible dudit manchon (14), lesdits moyens de sécurité élastiques (16) étant interposés entre ladite tige (15) et ladite unité de préhension rotative (30).

9. Machine (1) selon une ou plusieurs des revendications précédentes, **caractérisée en ce qu'**elle comprend :
- au moins un système d'alimentation (31, 32) qui alimente ledit vérin hydraulique (12, 13) en un fluide de travail ; et
- au moins un dispositif détecteur de pression (29) associé à au moins l'un desdits vérins hydrauliques (12, 13) et audit système d'alimentation (31, 32) et adapté pour détecter si la pression dudit fluide de travail alimenté par ledit système d'alimentation (31, 32) dépasse une valeur limite.
